# EUROPEAN PATENT APPLICATION

(11) **EP 4 528 968 A1**
(43) Date of publication of application: **26.03.2025**
(21) Application number: 24201477.7
(22) Date of filing: 19.09.2024
(51) Int. Cl.: H02J 3/48, H02J 3/32, H02J 3/14, B60L 53/63, B60L 53/80

(54) **METHOD FOR POWER GRID PEAK SHAVING AND FREQUENCY REGULATION ON BATTERY CHARGING AND SWAP DEVICE, CONTROL APPARATUS, AND STORAGE MEDIUM**

(30) Priority: 20.09.2023 CN 202311225196
(71) Applicant: Urumqi Electric Power Supply Company, State Grid Xinjiang Electric Power Co., Ltd., Urumqi City, Xinjiang Province (CN); Wuhan NIO Energy Co., Ltd., Wuhan City, Hubei Province (CN)
(72) Inventor: JIA, Tao, Jiading district, Shanghai (CN); JIANG, Jie Julaiti Abulizi, Jiading district, Shanghai (CN); ABULIZI, Julaiti, Jiading district, Shanghai (CN); ZHOU, Jianbang, Jiading district, Shanghai (CN); MIAO, Gang, Jiading district, Shanghai (CN); TAN, Zhuohui, Jiading district, Shanghai (CN); WANG, Liang, Jiading district, Shanghai (CN); WANG, Junke, Jiading district, Shanghai (CN); FU, Shenjie, Jiading district, Shanghai (CN); CHEN, Jiang, Jiading district, Shanghai (CN); PENG, Jian, Jiading district, Shanghai (CN); HU, Jianmin, Jiading district, Shanghai (CN); YANG, Junyi, Jiading district, Shanghai (CN); QI, Xiaofeng, Jiading district, Shanghai (CN); ZHANG, Xu, Jiading district, Shanghai (CN); ZHAO, Jincheng, Jiading district, Shanghai (CN); MA, Long, Jiading district, Shanghai (CN); HE, Xu, Jiading district, Shanghai (CN); HU, Kehan, Jiading district, Shanghai (CN); LI, Qing, Jiading district, Shanghai (CN); QI, Hongyan, Jiading district, Shanghai (CN); LIANG, Yan, Jiading district, Shanghai (CN); LI, Yongze, Jiading district, Shanghai (CN); MUSAHAN, Simayilijiang, Jiading district, Shanghai (CN); YUAN, Shaowei, Jiading district, Shanghai (CN); LI, Yuxiang, Jiading district, Shanghai (CN); LIANG, Kaixun, Jiading district, Shanghai (CN); AIKEBAIER, Bakeremu, Jiading district, Shanghai (CN)
(74) Representative: Vossius & Partner Patentanwälte Rechtsanwälte mbB

(57) **Abstract**

The disclosure relates to the field of power control technologies, and specifically provides a method for power grid peak shaving and frequency regulation on a battery charging and swap device, a control apparatus, and a storage medium, which are intended to solve the problem of how to effectively implement power grid peak shaving and frequency regulation at a battery charging and swap device side under the premise of taking into account factors such as characteristics and capabilities of the battery charging and swap device. For this purpose, according to the disclosure, a balanced power reference signal of a power grid is obtained based on a power auxiliary service requirement of the power grid, a real-time total power instruction signal of all battery charging and swap devices connected in the power grid is obtained based on the balanced power reference signal, and power allocation is performed, based on the real-time total power instruction signal, on the battery charging and swap devices connected in the power grid, thereby implementing the peak shaving and frequency regulation at the battery charging and swap device side. The disclosure can adapt to a variety of power auxiliary service requirements, to perform unified power control. In addition, the disclosure can fully exploit an adjustable capability of each battery charging and swap device, and perform power allocation in combination with the capabilities of the battery charging and swap devices connected in the power grid, thereby implementing quick and accurate peak shaving and frequency regulation at the battery charging and swap device side.

## Description

### TECHNICAL FIELD

The disclosure relates to the field of power control technologies, and specifically provides a method for power grid peak shaving and frequency regulation on a battery charging and swap device, a control apparatus, and a storage medium.

### BACKGROUND ART

The period from 2020 to 2050 marks a significant turning point for a power system, which will evolve from being dominated by conventional energy sources (coal, water, and gas) into a new power system dominated by new energy sources (wind, light, etc., and broadly speaking, renewable energy sources also include water). The new power system has two distinctive features.

One feature is that from the perspective of a power supply side, compared with conventional energy sources-based power generation, new energy sources-based power generation is characteristic of obvious imbalances in temporal scale and spatial scale.

The other feature is that from the perspective of a power consumption side, electric vehicles have also entered a period of rapid growth after 2020. In first-tier cities with a high penetration of electric vehicles, the impact of charging loads on a distribution network has already begun to emerge, that is, the original distribution network planning is no longer sufficient to meet the growing charging requirement.

An important means of solving these problems is to significantly enhance regulation and balancing capabilities of the power system. The conventional peak shaving and frequency regulation (fluctuation suppression) is mainly completed by a peak shaving and frequency regulation power station at a power grid side. If larger-scale new energy sources-based grid connection is achieved only in this way, the investment therein is undoubtedly enormous.

With the rapid development of the electric vehicles, the total storage capacity of traction batteries will also quickly reach an unneglectable level. It is essential for the batteries to play their due roles from the perspectives of both power and capacity. To achieve the objective of a new current system, it is highly necessary to develop power grid interaction between the electric vehicles and their battery charging and swap devices.

However, the existing battery charging and swap devices available in the market basically do not have a function of supporting auxiliary services (peak shaving and frequency regulation) of the power system, and cannot directly apply control architectures, apparatuses, and methods of traditional energy storage. The main reasons therefor are as follows.
1. The battery charging and swap device differ significantly from the traditional energy storage device in terms of hardware and software. For example,
   1) The battery charging and swap device lacks a dedicated energy storage battery, and dynamically reuses power of a traction battery.
   2) Joint construction of a station and a pile (unidirectional and bidirectional devices) is involved.
2. The battery charging and swap device also differs significantly from the traditional energy storage device in terms of operation mode. For example,
   1) The battery charging and swap device performs peak shaving and frequency regulation when a charging and swap service is met.
   2) In the case of joint construction of a station and a pile, the overall operating condition of the system is more complex.
   3) A battery swap station also requires off-peak charging, which makes it necessary to integrate its own charging operation mode and a power grid service in a control solution.
3. The public power grid can include a variety of auxiliary services, for example, a power instruction and an electricity quantity instruction.
4. Both centralized scheduling (secondary frequency regulation, etc.) and distributed control (primary frequency regulation) need to be covered.

Therefore, when power grid peak shaving and frequency regulation is performed, how to fully consider the characteristics of the battery charging and swap device, give full play to the capability of the device, and enhance an interaction capability of the power grid, so that a scheduling mode is more suitable for the power system is a problem that needs to be solved.

Correspondingly, a new solution for power grid peak shaving and frequency regulation is required in the art to solve the above problem.

### SUMMARY

In order to overcome the above defect, the disclosure is proposed to solve or at least partially solve the problem of how to effectively implement power grid peak shaving and frequency regulation at a battery charging and swap device side under the premise of taking into account factors such as characteristics and capabilities of the battery charging and swap device.

According to a first aspect, the disclosure provides a method for power grid peak shaving and frequency regulation on a battery charging and swap device. The method includes:
obtaining a balanced power reference signal of a power grid based on a power auxiliary service requirement of the power grid;
obtaining, based on the balanced power reference signal, a real-time total power instruction signal of all battery charging and swap devices connected in the power grid; and
performing, based on the real-time total power instruction signal, power allocation on the battery charging and swap devices connected in the power grid, to implement peak shaving and frequency regulation at a battery charging and swap device side.

In a technical solution of the above method for power grid peak shaving and frequency regulation on a battery charging and swap device, the obtaining a balanced power reference signal of a power grid based on a power auxiliary service requirement of the power grid includes:
when the power auxiliary service requirement is a primary frequency regulation requirement, obtaining the balanced power reference signal based on a power grid voltage of the power grid;
when the power auxiliary service requirement is a secondary frequency regulation requirement, obtaining the balanced power reference signal based on a scheduling instruction from a controller corresponding to the power grid; and
when the power auxiliary service requirement is an electricity quantity regulation requirement, obtaining the balanced power reference signal based on an electricity quantity instruction corresponding to the electricity quantity regulation requirement.

In a technical solution of the above method for power grid peak shaving and frequency regulation on a battery charging and swap device, the obtaining the balanced power reference signal based on a power grid voltage of the power grid includes:
performing frequency acquisition on the power grid voltage, to obtain a power grid frequency signal of the power grid voltage; and
obtaining the balanced power reference signal based on a preset power-frequency curve and the power grid frequency signal; and/or
the scheduling instruction includes a frequency regulation instruction output by an upper-level controller or a local controller of the power grid; and
the obtaining the balanced power reference signal based on a scheduling instruction from a controller corresponding to the power grid includes:
obtaining the balanced power reference signal based on the frequency regulation instruction; and/or
the obtaining the balanced power reference signal based on an electricity quantity instruction corresponding to the electricity quantity regulation requirement includes:
obtaining, based on the electricity quantity instruction, an electricity quantity signal corresponding to the electricity quantity instruction; and
obtaining the balanced power reference signal based on the electricity quantity signal.

In a technical solution of the above method for power grid peak shaving and frequency regulation on a battery charging and swap device, the obtaining, based on the balanced power reference signal, a real-time total power instruction signal of all battery charging and swap devices connected in the power grid includes:
obtaining a total power reference signal of the power grid based on the balanced power reference signal and a current power baseline signal of the power grid; and
obtaining, based on the total power reference signal and a current adjustable power range and/or adjustable electricity quantity range of the power grid, the real-time total power instruction signal of all the battery charging and swap devices connected in the power grid.

In a technical solution of the above method for power grid peak shaving and frequency regulation on a battery charging and swap device, the obtaining a total power reference signal of the power grid based on the balanced power reference signal and a current power baseline signal of the power grid includes:
obtaining an error compensation value of the power grid; and
obtaining the total power reference signal based on the error compensation value, the balanced power reference signal, and the power baseline signal.

In a technical solution of the above method for power grid peak shaving and frequency regulation on a battery charging and swap device, the obtaining, based on the total power reference signal and a current adjustable power range and/or adjustable electricity quantity range of the power grid, the real-time total power instruction signal of all the battery charging and swap devices connected in the power grid includes:
obtaining a device baseline deviation of the power grid based on a difference value between an actual power of a battery charging and swap device and/or power generation device connected in the power grid and a predicted baseline thereof;
obtaining a real-time adjustable power range and/or real-time adjustable electricity quantity range of the power grid based on the device baseline deviation and the adjustable power range and/or adjustable electricity quantity range of the power grid; and
setting a limit of a power instruction based on the real-time adjustable power range and/or real-time adjustable electricity quantity range, to obtain the real-time total power instruction signal.

In a technical solution of the above method for power grid peak shaving and frequency regulation on a battery charging and swap device, the performing, based on the real-time total power instruction signal, power allocation on the battery charging and swap devices connected in the power grid includes:
performing error control based on the real-time total power instruction signal and a power feedback value output at an alternating current side of the power grid, to obtain a fine-tuning power signal; and
performing power allocation on the battery charging and swap devices based on the fine-tuning power signal.

In a technical solution of the above method for power grid peak shaving and frequency regulation on a battery charging and swap device, the performing power allocation on the battery charging and swap devices based on the fine-tuning power signal includes:
obtaining a final power execution signal based on the fine-tuning power signal by using the real-time total power instruction signal and an estimated system loss of the power grid as feedforward items; and
performing power allocation on the battery charging and swap devices based on the final power execution signal.

According to a second aspect, a control apparatus is provided. The control apparatus includes at least one processor and at least one storage apparatus adapted to store a plurality of pieces of program code, where the program code is adapted to be loaded and run by the processor to perform the method for power grid peak shaving and frequency regulation on a battery charging and swap device described in any one of the technical solutions for the above method for power grid peak shaving and frequency regulation on a battery charging and swap device.

According to a third aspect, a computer-readable storage medium is provided. A plurality of pieces of program code are stored in the computer-readable storage medium, and the program code is adapted to be loaded and run by a processor to perform the method for power grid peak shaving and frequency regulation on a battery charging and swap device described in any one of the technical solutions for the above method for power grid peak shaving and frequency regulation on a battery charging and swap device.

The one or more technical solutions of the disclosure described above have at least one or more of the following beneficial effects:
In implementation of the technical solutions of the disclosure, according to the disclosure, the balanced power reference signal of the power grid is obtained based on the power auxiliary service requirement of the power grid, the real-time total power instruction signal of all the battery charging and swap devices connected in the power grid is obtained based on the balanced power reference signal, and power allocation is performed, based on the real-time total power instruction signal, on the battery charging and swap devices connected in the power grid, thereby implementing the peak shaving and frequency regulation at the battery charging and swap device side. Through the above configuration, the disclosure can adapt to a variety of power auxiliary service requirements, to perform unified power control. In addition, the disclosure can fully exploit an adjustable capability of each battery charging and swap device, and perform power allocation in combination with the capabilities of the battery charging and swap devices connected in the power grid, thereby implementing quick and accurate peak shaving and frequency regulation at the battery charging and swap device side.

### BRIEF DESCRIPTION OF THE DRAWINGS

The disclosed content of the disclosure will become more readily understood with reference to the accompanying drawings. Those skilled in the art readily understand that: These accompanying drawings are merely for illustrative purposes and are not intended to limit the scope of protection of the disclosure. In the drawings:
FIG. 1 is a schematic flowchart of main steps of a method for power grid peak shaving and frequency regulation on a battery charging and swap device according to an embodiment of the disclosure;
FIG. 2 is a schematic diagram of a main architecture of a method for power grid peak shaving and frequency regulation on a battery charging and swap device according to an implementation of an embodiment of the disclosure;
FIG. 3 is a schematic diagram of a main flow of a method for power grid peak shaving and frequency regulation on a battery charging and swap device in the case of a primary frequency regulation requirement according to an implementation of an embodiment of the disclosure;
FIG. 4 is a schematic diagram of a main flow of a method for power grid peak shaving and frequency regulation on a battery charging and swap device in the case of a secondary frequency regulation requirement according to an implementation of an embodiment of the disclosure; and
FIG. 5 is a schematic diagram of a main flow of a method for power grid peak shaving and frequency regulation on a battery charging and swap device in the case of an electricity quantity regulation requirement according to an implementation of an embodiment of the disclosure.

### DETAILED DESCRIPTION OF EMBODIMENTS

Some implementations of the disclosure are described below with reference to the accompanying drawings. Those skilled in the art should understand that these implementations are merely used to explain the technical principles of the disclosure, and are not intended to limit the scope of protection of the disclosure.

In the description of the disclosure, a "module" or "processor" may include hardware, software, or a combination thereof. A module may include a hardware circuit, various suitable sensors, a communication port, and a memory, may include a software part, for example, program code, or may be a combination of software and hardware. The processor may be a central processing unit, a microprocessor, a graphics processing unit, a digital signal processor, or any other suitable processor. The processor has a data and/or signal processing function. The processor may be implemented in software, hardware, or a combination thereof. A non-transitory computer-readable storage medium includes any suitable medium that can store program code, for example, a magnetic disk, a hard disk, an optical disc, a flash memory, a read-only memory, or a random access memory. The term "A and/or B" indicates all possible combinations of A and B, for example, only A, only B, or A and B. The term "at least one A or B" or "at least one of A and B" has a meaning similar to "A and/or B" and may include only A, only B, or A and B. The terms "a/an" and "this" in the singular form may also include the plural form.

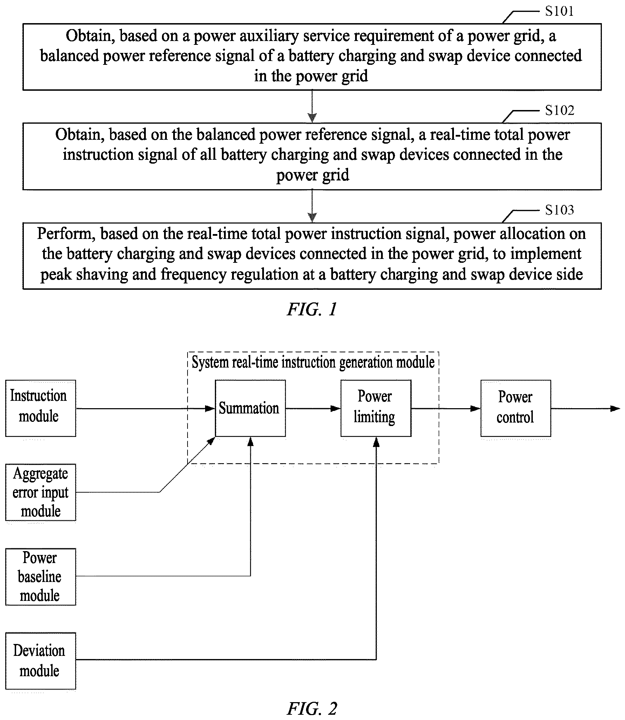

With reference to FIG. 1, FIG. 1 is a schematic flowchart of main steps of a method for power grid peak shaving and frequency regulation on a battery charging and swap device according to an embodiment of the disclosure. As shown in FIG. 1, the method for power grid peak shaving and frequency regulation on a battery charging and swap device in this embodiment of the disclosure mainly includes the following steps S101 to S103.

Step S101: Obtain a balanced power reference signal of a power grid based on a power auxiliary service requirement of the power grid.

In this embodiment, the balanced power reference signal of the power grid may be obtained based on the power auxiliary service requirement of the power grid. The balanced power reference signal is a power adjustment amount that is generated, based on the power auxiliary service requirement, for adjustment of a real-time total power instruction signal of all battery charging and swap devices connected in the power grid. That is, a power adjustment amount corresponding to the power auxiliary service requirement is determined based on the power auxiliary service requirement.

In an implementation, the power auxiliary service requirement may include a primary frequency regulation requirement, a secondary frequency regulation requirement, an electricity quantity regulation requirement, etc. The primary frequency regulation requirement is a requirement for automatic frequency regulation of frequency characteristics of a speed regulation system of a generator set with a change in frequency. The secondary frequency regulation requirement is a requirement for use of a synchronizer to increase or reduce loads of some generator sets to restore a power grid frequency when loads or the output of power generation of a power system changes greatly and primary frequency regulation cannot restore the frequency to a specified range. The electricity quantity regulation requirement is a requirement for regulation of the electricity quantity of the grid.

Step S102: Obtain, based on the balanced power reference signal, a real-time total power instruction signal of all battery charging and swap devices connected in the power grid.

In this embodiment, the real-time total power instruction signal of all the battery charging and swap devices connected in the power grid may be obtained based on the balanced power reference signal. The real-time total power instruction signal is the sum of real-time powers of all the battery charging and swap devices connected in the power grid.

In an implementation, the balanced power reference signal and a power baseline signal of the power grid may be added, to obtain the real-time total power instruction signal of all the battery charging and swap devices connected in the power grid.

Step S103: Perform, based on the real-time total power instruction signal, power allocation on the battery charging and swap devices connected in the power grid, to implement peak shaving and frequency regulation at a battery charging and swap device side.

In this embodiment, power allocation may be performed, based on the real-time total power instruction signal, on the battery charging and swap devices connected in the power grid, thereby implementing the peak shaving and frequency regulation of the power grid at the battery charging and swap device side.

In an implementation, power allocation for the battery charging and swap devices may be implemented based on the real-time total power instruction signal and an adjustable capability of each battery charging and swap device connected in the power grid.

In an implementation, the battery charging and swap device may include a battery swap station, a charging station, an integrated optical (storage) battery charging and swap station, etc.

Based on the above steps S101 to S103, according to this embodiment of the disclosure, the balanced power reference signal of the power grid is obtained based on the power auxiliary service requirement of the power grid, the real-time total power instruction signal of all the battery charging and swap devices connected in the power grid is obtained based on the balanced power reference signal, and power allocation is performed, based on the real-time total power instruction signal, on the battery charging and swap devices connected in the power grid, thereby implementing the peak shaving and frequency regulation at the battery charging and swap device side. Through the above configuration, this embodiment of the disclosure can adapt to a variety of power auxiliary service requirements, to perform unified power control. In addition, this embodiment of the disclosure can fully exploit the adjustable capability of each battery charging and swap device, and perform power allocation in combination with the capabilities of the battery charging and swap devices connected in the power grid, thereby implementing quick and accurate peak shaving and frequency regulation at the battery charging and swap device side.

Steps S101, S 102, and S103 are further described separately below.

In an implementation of this embodiment of the disclosure, step S101 may further include steps S 1011 to S1013 as follows.

Step S1011: When the power auxiliary service requirement is the primary frequency regulation requirement, obtain the balanced power reference signal based on a power grid voltage of the power grid.

In this implementation, step S1011 may further include the following steps S10111 and S10112.

Step S10111: Perform frequency acquisition on the power grid voltage, to obtain a power grid frequency signal of the power grid voltage.

Step S10112: Obtain the balanced power reference signal based on a preset power-frequency curve and the power grid frequency signal.

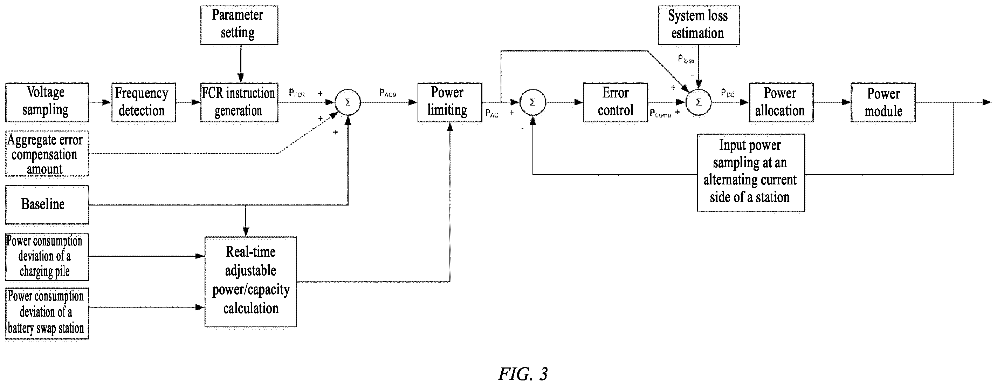

In this implementation, reference may be made to FIG. 3. FIG. 3 is a schematic diagram of a main flow of a method for power grid peak shaving and frequency regulation on a battery charging and swap device in the case of a primary frequency regulation requirement according to an implementation of an embodiment of the disclosure. As shown in FIG. 3, when the power auxiliary service requirement is the primary frequency regulation requirement, frequency sampling, that is, voltage sampling and frequency detection shown in FIG. 3, may be performed on the power grid voltage, to obtain the power grid frequency signal of the power grid voltage. Then, the balanced power reference signal may be obtained based on the preset power-frequency curve and the power grid frequency signal. The power-frequency curve may be a droop control curve for the power grid. Because droop control curves in various regions have different requirements, a current droop control curve may be used as a parameter setting input in FIG. 3, and the balanced power reference signal may be obtained based on the power grid frequency signal and the droop control curve. That is, in FIG. 3, the power grid frequency signal and the droop control curve are input into an FCR instruction generation module, to obtain P_{FCR} (the balanced power reference signal). FCR is frequency containment reserve.

Step S1012: When the power auxiliary service requirement is the secondary frequency regulation requirement, obtain the balanced power reference signal based on a scheduling instruction from a controller corresponding to the power grid.

In this implementation, when the power auxiliary service requirement is the secondary frequency regulation requirement, the balanced power reference signal may be obtained based on the scheduling instruction from the controller corresponding to the power grid, for example, a frequency regulation instruction output from an upper-level controller or a local controller of the power grid. The controller may be an automatic gain control (AGC) controller.

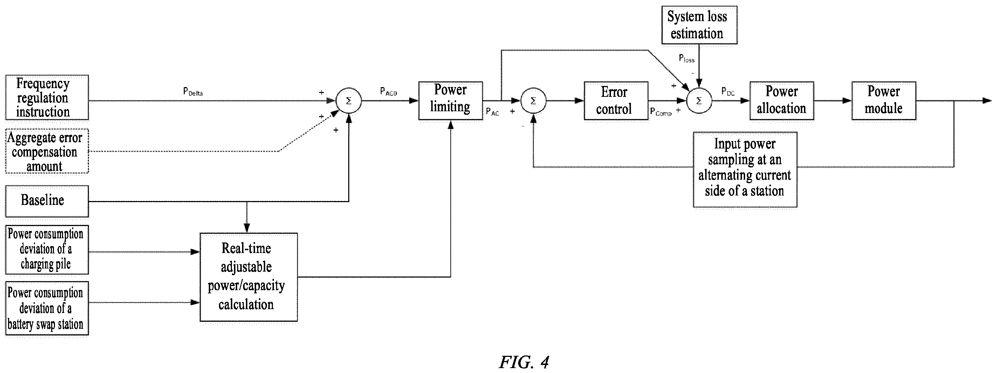

With reference to FIG. 4, FIG. 4 is a schematic diagram of a main flow of a method for power grid peak shaving and frequency regulation on a battery charging and swap device in the case of a secondary frequency regulation requirement according to an implementation of an embodiment of the disclosure. As shown in FIG. 4, a balanced power reference signal P_{Delta} may be obtained based on the frequency regulation instruction.

Step S1013: When the power auxiliary service requirement is the electricity quantity regulation requirement, obtain the balanced power reference signal based on an electricity quantity instruction corresponding to the electricity quantity regulation requirement.

In this implementation, step S1013 may further include the following steps S10131 and S10132.

Step S10131: Obtain, based on the electricity quantity instruction, an electricity quantity signal corresponding to the electricity quantity instruction.

Step S10132: Obtain the balanced power reference signal based on the electricity quantity signal.

In this implementation, when the power auxiliary service requirement is the electricity quantity regulation requirement, that is, the power grid requires a closed loop of electricity quantity within a specific period of time, a corresponding electricity quantity signal may be obtained based on the electricity quantity instruction, and then the electricity quantity signal may be converted into a power signal as the balanced power reference signal.

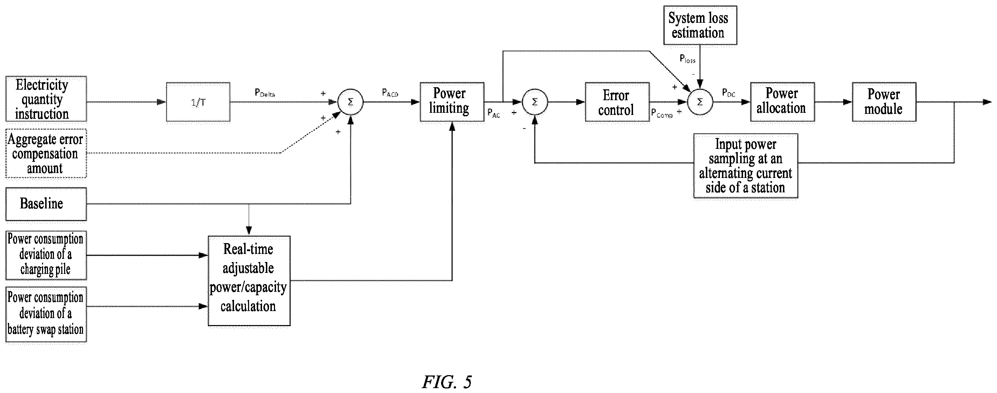

With reference to FIG. 5, FIG. 5 is a schematic diagram of a main flow of a method for power grid peak shaving and frequency regulation on a battery charging and swap device in the case of an electricity quantity regulation requirement according to an implementation of an embodiment of the disclosure. As shown in FIG. 5, an average power within a period of time T may be used as the balanced power reference signal based on the electricity quantity signal.

In an implementation of this embodiment of the disclosure, step S102 may further include the following steps S1021 and S1022.

Step S1021: Obtain a total power reference signal of the power grid based on the balanced power reference signal and a current power baseline signal of the power grid.

In this implementation, step S1021 may further include the following steps S10211 and S10212.

Step S10211: Obtain an error compensation value of the power grid.

Step S10212: Obtain the total power reference signal based on the error compensation value, the balanced power reference signal, and the power baseline signal.

In this implementation, the error compensation value of the power grid may be obtained. The error compensation value, the balanced power reference signal, and the power baseline signal are added to obtain the total power reference signal. The error compensation value of the power grid may be a power compensation or an electricity quantity compensation, which is used to compensate for an error between a power or an electricity quantity obtained after aggregation of a plurality of stations (devices) and a desired power or a desired electricity quantity. The error may arise from additional losses that are not accounted for, a measurement errors, or errors caused by some devices going offline, etc. The error compensation value is considered, so that compensations can be made for accumulative errors, changes in power consumption (for example, due to lighting) of other uncontrollable auxiliary devices, and emergencies (temporary orders or failures of some devices), thereby improving the control accuracy.

As shown in FIG. 3, P_{FCR} (the balanced power reference signal), an aggregate error compensation amount (the error compensation value), and a baseline (the power baseline signal) may be added (Σ), to obtain P_{ACD} (the total power reference signal).

Step S1022: Obtain, based on the total power reference signal and a current adjustable power range and/or adjustable electricity quantity range of the power grid, the real-time total power instruction signal of all the battery charging and swap devices connected in the power grid.

In this implementation, step S1022 may further include the following steps S10221 to S10223.

Step S10221: Obtain a device baseline deviation of the power grid based on a difference value between an actual power of a battery charging and swap device and/or power generation device connected in the power grid and a predicted baseline thereof.

Step S10222: Obtain a real-time adjustable power range and/or real-time adjustable electricity quantity range of the power grid based on the device baseline deviation and the adjustable power range and/or adjustable electricity quantity range of the power grid.

Step S10223: Set a limit of a power instruction based on the real-time adjustable power range and/or real-time adjustable electricity quantity range, to obtain the real-time total power instruction signal.

In this implementation, power limiting of the power grid can be implemented based on the real-time adjustable power range and real-time adjustable electricity quantity range of the power grid. Specifically, as shown in FIG. 3, a difference value between an actual power of a charging pile and a predicted baseline of the charging pile is received, and a difference value between an actual power of a battery swap station and a predicted baseline for the battery swap station is received. Further, a difference value between an actual power and a predicted baseline of a distributed power generation device such as a photovoltaic power generation device may also be received. The difference value for the power generation device needs to be multiplied by a negative sign, that is, the distributed power generation device is used as a negative load. The real-time adjustable power range and the real-time adjustable electricity quantity range can be calculated by subtracting the obtained device baseline deviation from the adjustable power range and the adjustable electricity quantity range of all the battery charging and swap devices connected in the power grid. Then, the power limit is set based on the real-time adjustable power range and the real-time adjustable electricity quantity range.

In an implementation of this embodiment of the disclosure, step S103 may further include the following steps S1031 and S1032.

Step S1031: Perform error control based on the real-time total power instruction signal and a power feedback value output at an alternating current side of the power grid, to obtain a fine-tuning power signal.

In this implementation, as shown in FIG. 3, the power feedback value output at the alternating current side of the power grid may be subtracted from the real-time total power instruction signal (input power sampling at an alternating current side of a station), and error control may be performed by using a regulator, to obtain the fine-tuning power signal. The regulator may be a proportional integral derivative (PID) regulator.

Step S1032: Perform power allocation on the battery charging and swap devices based on the fine-tuning power signal.

In this implementation, step S1032 may further include the following steps S10321 and S10322.

Step S10321: Obtain a final power execution signal based on the fine-tuning power signal by using the real-time total power instruction signal and an estimated system loss of the power grid as feedforward items.

Step S10322: Perform power allocation on the battery charging and swap devices based on the final power execution signal.

In this implementation, as shown in FIG. 3, the real-time total power instruction signal and the estimated system loss of the power grid may be used as the feedforward items, and the feedforward items and the fine-tuning power signal may be added to obtain the final power execution signal, which may be received by a power allocation module for allocation to each execution unit of the battery charging and swap device, for example, each charging branch of the battery swap station, each charging pile, or even other power controlled branches, so that a power module of each branch performs the corresponding power. The estimated system loss may be losses caused by some auxiliary discharges, such as lighting and air conditioning.

It should be noted that FIG. 4 and FIG. 5 are the same as FIG. 3 except for the part of obtaining the balanced power reference signal. Therefore, for the parts of FIG. 4 and FIG. 5 except for the part of obtaining the balanced power reference signal, reference may be made to FIG. 3, and FIG. 4 and FIG. 5 are not described again.

In an implementation, reference may be made to FIG. 2. FIG. 2 is a schematic diagram of a main architecture of a method for power grid peak shaving and frequency regulation on a battery charging and swap device according to an implementation of an embodiment of the disclosure. As shown in FIG. 2, the method for power grid peak shaving and frequency regulation on a battery charging and swap device may be implemented by an instruction module, an aggregate error input module, a power baseline module, a deviation module, a system real-time instruction generation module, and a power control module.

The instruction module is configured to generate the balanced power reference signal by receiving an instruction (such as a real-time power instruction, an electricity quantity instruction, and a power grid service start or stop instruction) from the power grid or an upper-level controller, or by receiving a locally generated instruction (for example, a power instruction generated by acquiring the power grid frequency signal in the case of the primary frequency regulation requirement) based on different power auxiliary service requirements.

The power baseline module is configured to receive a power baseline signal (i.e., a predetermined real-time power-time curve) generated at an upper level or locally.

The aggregate error input module is configured to receive an error compensation value (a power or electricity quantity compensation) of the upper level, to compensate for an error between a power or an electricity quantity obtained after aggregation of a plurality of stations (devices) and a desired power or electricity quantity. The error may arise from additional losses that are not accounted for, measurement errors, errors caused by some devices going offline, etc.

The deviation module is configured to calculate a deviation between a current operating requirement of the battery charging and swap device and a baseline, including a deviation caused by unexpected swap and charging.

The system real-time instruction generation module is configured to calculate the sum of signals of the instruction module, the power baseline module, the aggregation error input module, and the deviation module, and output the real-time total power instruction signal after power limiting.

The power control module is configured to calculate the measurement errors in the battery charging and swap device, the additional losses, or the errors caused by some battery charging and swap devices failing to achieve an execution power or an electricity quantity target due to some limiting conditions (such as a limitation of a line voltage on a power output, and a derated device due to overt-temperature), and compensate for the errors or perform power reallocation, to reduce a final output error.

Through the above configuration, the disclosure can adapt only one control policy to a variety of power auxiliary service requirements and finally to unified power control, thereby facilitating alignment of reporting baselines and performing a closed loop. In addition, deviations arising from battery swap or charging orders are simplified into dynamic adjustment of an available capacity and an available power of the system, which can reduce control variables in a control process, and effectively simplify the control process (more control variables indicates a higher order of the system and a higher degree of complexity). Moreover, the reduction in the system complexity through a change in constraints (within a control framework, the form of constraints remains unchanged, and only a threshold is changed, for example, a constant system order is kept in a short period of time by reserving a margin and limiting a change speed of the threshold) can effectively lower requirements for computing power and resources of the controller. In addition, a power grid peak shaving and frequency regulation instruction corresponding to a power auxiliary service requirement of a local or cloud controller can be received, and power is decomposed to each device for execution under the condition of meeting real-time operation constraints for the battery charging and swap device and constraints of the power grid, that is, constraints of the device itself. Moreover, the disclosure has two error compensation stages for respective compensation for an aggregate error and a local control error, thereby improving the control accuracy.

It should be noted that, although the steps are described in a particular sequence in the above embodiments, those skilled in the art may understand that, to implement the effects of the disclosure, different steps are not necessarily performed in such a sequence, and the steps may be performed simultaneously (in parallel) or in another sequence. These changes fall within the scope of protection of the disclosure.

Those skilled in the art may understand that all or some of the procedures in the methods in the above embodiments of the disclosure may be implemented by using a computer program instructing related hardware. The computer program may be stored in a computer-readable storage medium. When the computer program is executed by a processor, the steps in the above method embodiments may be implemented. The computer program includes computer program code, and the computer program code may be in a source code form, an object code form, a form of an executable file, some intermediate forms, or the like. The computer-readable storage medium may include: any entity or apparatus that can carry the computer program code, a medium, a USB flash drive, a removable hard disk, a magnetic disk, an optical disc, a computer memory, a read-only memory, a random access memory, an electric carrier signal, a telecommunications signal, a software distribution medium, and the like. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

Further, the disclosure further provides a control apparatus. In an embodiment of the control apparatus according to the disclosure, the control apparatus includes a processor and a storage apparatus. The storage apparatus may be configured to store a program for performing the method for power grid peak shaving and frequency regulation on a battery charging and swap device in the above method embodiments. The processor may be configured to execute a program in the storage apparatus, where the program includes, but is not limited to, the program for performing the method for power grid peak shaving and frequency regulation on a battery charging and swap device in the above method embodiments. For ease of description, only parts related to the embodiments of the disclosure are shown. For specific technical details that are not disclosed, refer to the method part of the embodiments of the disclosure. The control apparatus may be a control apparatus formed by various electronic devices.

The control apparatus in this embodiment of the disclosure may be a control apparatus formed by various electronic devices. In some possible implementations, the control apparatus may include a plurality of storage apparatuses and a plurality of processors. The program for performing the method for power grid peak shaving and frequency regulation on a battery charging and swap device in the above method embodiments may be divided into a plurality of subprograms, and the subprograms may be separately loaded and run by the processors to carry out different steps of the method for power grid peak shaving and frequency regulation on a battery charging and swap device in the above method embodiments. Specifically, each subprogram may be stored in a different storage apparatus, and each processor may be configured to execute programs in one or more storage apparatuses to jointly implement the method for power grid peak shaving and frequency regulation on a battery charging and swap device in the above method embodiments. In other words, the processors separately perform different steps of the method for power grid peak shaving and frequency regulation on a battery charging and swap device in the above method embodiments, to jointly implement the method for power grid peak shaving and frequency regulation on a battery charging and swap device in the above method embodiments.

The plurality of processors may be processors deployed on a same device. For example, the foregoing control apparatus may be a high-performance device including a plurality of processors, and the plurality of processors may be processors configured on the high-performance device. Alternatively, the plurality of processors may be processors deployed on different devices. For example, the foregoing control apparatus may be a server cluster, and the plurality of processors may be processors on different servers in the server cluster.

Further, the disclosure further provides a computer-readable storage medium. In an embodiment of the computer-readable storage medium according to the disclosure, the computer-readable storage medium may be configured to store a program for performing the method for power grid peak shaving and frequency regulation on a battery charging and swap device in the above method embodiments, and the program may be loaded and run by a processor to implement the above method for power grid peak shaving and frequency regulation on a battery charging and swap device. For ease of description, only parts related to the embodiments of the disclosure are shown. For specific technical details that are not disclosed, refer to the method part of the embodiments of the disclosure. The computer-readable storage medium may be a storage apparatus device formed by various electronic devices. Optionally, the computer-readable storage medium in this embodiment of the disclosure is a non-transitory computer-readable storage medium.

Further, it should be understood that, because the configuration of modules is merely intended to illustrate function units of the apparatus in the disclosure, physical devices corresponding to these modules may be a processor itself, or part of software, part of hardware, or part of a combination of software and hardware in the processor. Therefore, the number of modules in the figure is merely illustrative.

Those skilled in the art can understand that the modules in the apparatus may be adaptively split or merged. Such a split or combination of specific modules does not cause the technical solutions to depart from the principle of the disclosure. Therefore, technical solutions after any such split or combination shall all fall within the scope of protection of the disclosure.

Heretofore, the technical solutions of the disclosure have been described with reference to the preferred implementations shown in the accompanying drawings. However, those skilled in the art can readily understand that the scope of protection of the disclosure is apparently not limited to these specific implementations. Without departing from the principles of the disclosure, those skilled in the art may make equivalent changes or replacements to related technical features. The technical solutions obtained after these changes or replacements fall within the scope of protection of the disclosure.

## Claims

1. A method for power grid peak shaving and frequency regulation on a battery charging and swap device, the method comprising:
obtaining a balanced power reference signal of a power grid based on a power auxiliary service requirement of the power grid;
obtaining, based on the balanced power reference signal, a real-time total power instruction signal of all battery charging and swap devices connected in the power grid; and
performing, based on the real-time total power instruction signal, power allocation on the battery charging and swap devices connected in the power grid, to implement peak shaving and frequency regulation at a battery charging and swap device side.

2. The method for power grid peak shaving and frequency regulation on a battery charging and swap device according to claim 1, wherein
the obtaining a balanced power reference signal of a power grid based on a power auxiliary service requirement of the power grid comprises:
when the power auxiliary service requirement is a primary frequency regulation requirement, obtaining the balanced power reference signal based on a power grid voltage of the power grid;
when the power auxiliary service requirement is a secondary frequency regulation requirement, obtaining the balanced power reference signal based on a scheduling instruction from a controller corresponding to the power grid; and
when the power auxiliary service requirement is an electricity quantity regulation requirement, obtaining the balanced power reference signal based on an electricity quantity instruction corresponding to the electricity quantity regulation requirement.

3. The method for power grid peak shaving and frequency regulation on a battery charging and swap device according to claim 2, wherein
the obtaining the balanced power reference signal based on a power grid voltage of the power grid comprises:
performing frequency acquisition on the power grid voltage, to obtain a power grid frequency signal of the power grid voltage; and
obtaining the balanced power reference signal based on a preset power-frequency curve and the power grid frequency signal; and/or
the scheduling instruction comprises a frequency regulation instruction output by an upper-level controller or a local controller of the power grid; and
the obtaining the balanced power reference signal based on a scheduling instruction from a controller corresponding to the power grid comprises:
obtaining the balanced power reference signal based on the frequency regulation instruction; and/or
the obtaining the balanced power reference signal based on an electricity quantity instruction corresponding to the electricity quantity regulation requirement comprises:
obtaining, based on the electricity quantity instruction, an electricity quantity signal corresponding to the electricity quantity instruction; and
obtaining the balanced power reference signal based on the electricity quantity signal.

4. The method for power grid peak shaving and frequency regulation on a battery charging and swap device according to any one of claims 1 to 3, wherein
the obtaining, based on the balanced power reference signal, a real-time total power instruction signal of all battery charging and swap devices connected in the power grid comprises:
obtaining a total power reference signal of the power grid based on the balanced power reference signal and a current power baseline signal of the power grid; and
obtaining, based on the total power reference signal and a current adjustable power range and/or adjustable electricity quantity range of the power grid, the real-time total power instruction signal of all the battery charging and swap devices connected in the power grid.

5. The method for power grid peak shaving and frequency regulation on a battery charging and swap device according to claim 4, wherein
the obtaining a total power reference signal of the power grid based on the balanced power reference signal and a current power baseline signal of the power grid comprises:
obtaining an error compensation value of the power grid; and
obtaining the total power reference signal based on the error compensation value, the balanced power reference signal, and the power baseline signal.

6. The method for power grid peak shaving and frequency regulation on a battery charging and swap device according to claim 4 or 5, wherein
the obtaining, based on the total power reference signal and a current adjustable power range and/or adjustable electricity quantity range of the power grid, the real-time total power instruction signal of all the battery charging and swap devices connected in the power grid comprises:
obtaining a device baseline deviation of the power grid based on a difference value between an actual power of a battery charging and swap device and/or power generation device connected in the power grid and a predicted baseline thereof;
obtaining a real-time adjustable power range and/or real-time adjustable electricity quantity range of the power grid based on the device baseline deviation and the adjustable power range and/or adjustable electricity quantity range of the power grid; and
setting a limit of a power instruction based on the real-time adjustable power range and/or real-time adjustable electricity quantity range, to obtain the real-time total power instruction signal.

7. The method for power grid peak shaving and frequency regulation on a battery charging and swap device according to any one of claims 1 to 6, wherein
the performing, based on the real-time total power instruction signal, power allocation on the battery charging and swap devices connected in the power grid comprises:
performing error control based on the real-time total power instruction signal and a power feedback value output at an alternating current side of the power grid, to obtain a fine-tuning power signal; and
performing power allocation on the battery charging and swap devices based on the fine-tuning power signal.

8. The method for power grid peak shaving and frequency regulation on a battery charging and swap device according to claim 7, wherein
the performing power allocation on the battery charging and swap devices based on the fine-tuning power signal comprises:
obtaining a final power execution signal based on the fine-tuning power signal by using the real-time total power instruction signal and an estimated system loss of the power grid as feedforward items; and
performing power allocation on the battery charging and swap devices based on the final power execution signal.

9. A control apparatus, comprising at least one processor and at least one storage apparatus adapted to store a plurality of pieces of program code, wherein the program code is adapted to be loaded and run by the processor to perform the method for power grid peak shaving and frequency regulation on a battery charging and swap device according to any one of claims 1 to 8.

10. A computer-readable storage medium storing a plurality of pieces of program code, wherein the program code is adapted to be loaded and run by a processor to perform the method for power grid peak shaving and frequency regulation on a battery charging and swap device according to any one of claims 1 to 8.
